# EUROPEAN PATENT APPLICATION

(11) **EP 1 670 156 A1**
(43) Date of publication of application: **14.06.2006**
(21) Application number: 04771485.2
(22) Date of filing: 04.08.2004
(51) Int. Cl.: H04B 7/10, H04B 7/08, H04B 1/18

(54) **ARRAY ANTENNA RECEIVER APPARATUS AND RECEIVED SIGNAL CORRECTING METHOD**

(30) Priority: 11.08.2003 JP 2003291778
(71) Applicant: MATSUSHITA ELECTRIC INDUSTRIAL CO., LTD., Kadoma-shi, Osaka 571-8501 (JP)
(72) Inventor: IZUMI, Takashi, Kanazawa-shi, Ishikawa 920-0865 (JP); TAKEYAMA, Kazuhiko, Kanazawa-shi, Ishikawa 920-0024 (JP); IKEDA, Kazuhiko, Matto-shi, Ishikawa 924-0068 (JP); ENOKI, Takashi, Yokohama-shi, Kanagawa 233-0006 (JP); SASAKI, Makoto, Yokohama-shi, Kanagawa 233-0012 (JP)
(74) Representative: Grünecker, Kinkeldey, Stockmair & Schwanhäusser Anwaltssozietät
(86) International application number: PCT/JP2004/011500
(87) International publication number: WO 2005/015773

(57) **Abstract**

An array antenna reception apparatus capable of calibrating a received signal with high accuracy without generating unnecessary radiations at an antenna section even when the power level of the received signal is low. In this apparatus, reference signal generation section (123) operates only when the power level of the received signal captured by antenna section (111) is low and a reference signal is generated. Error calculation section (122) compares information (S3) on the received signal multiplexed with the reference signal with calibration signal (S4) to thereby calculate an error of the received signal produced in the received signal due to signal processing at reception unit (110) and instructs received signal processing section (121) to compensate for the received signal based on the calculated error of the received signal.

## Description

### Technical Field

The present invention relates to a radio apparatus based on an array antenna scheme and received signal calibration method, and more particularly, to a radio apparatus based on an adaptive array antenna scheme capable of controlling antenna directivity and a received signal calibration method using this apparatus.

### Background Art

Conventionally, a radio apparatus based on an adaptive array antenna scheme is known that is provided with a plurality of radio sections and controls antenna directivity by applying phase or amplitude weighting processing to signals transmitted/received via the radio sections (see, for example, Unexamined Japanese Patent Publication No. HEI 9-219615). Such a radio apparatus based on the adaptive array antenna scheme can improve signal-to-interference ratios of signals transmitted/received by presetting the antenna directivity before starting a communication and improve the efficiency of frequency utilization and quality of a radio communication channel used.

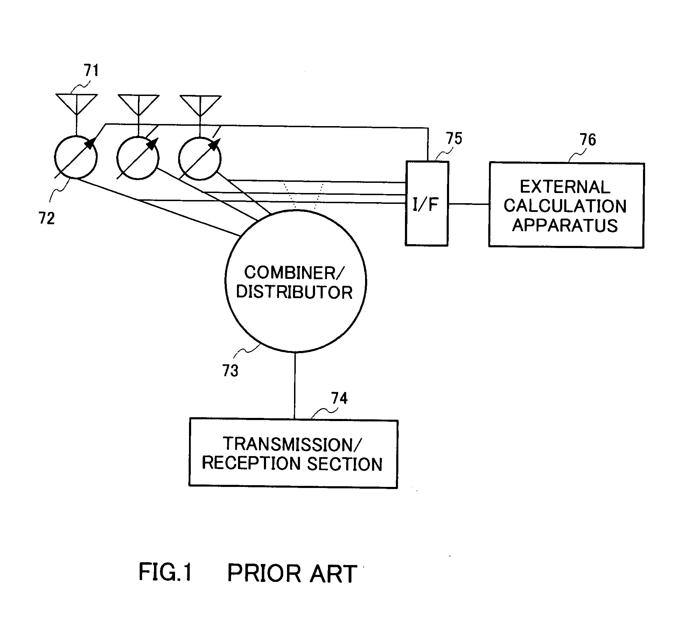

FIG.1 shows the configuration of a radio apparatus based on an adaptive array antenna scheme described in Unexamined Japanese Patent Publication No. HEI 9-219615. This radio apparatus based on the adaptive array antenna scheme is provided with a plurality of radio sections including antenna element 71, weighting unit 72 and amplifier (not shown) or the like. Weighting unit 72 in each radio section applies weighting processing to the phase and amplitude of a transmitted/received signal respectively. This weighting processing controls antenna directivity of the radio apparatus and improves the signal-to-interference ratio of this radio apparatus consequently.

However, such a radio apparatus based on the adaptive array antenna scheme may assign weights different from an initial setting to transmitted/received signals due to individual differences among the respective radio sections and deteriorate antenna directivity of the radio apparatus. For this reason, the radio apparatus based on the adaptive array antenna scheme needs to observe the phases or amplitudes of the weighted transmitted/received signals periodically and calibrate the weights based on the observed values. An example of the calibration method is described in Unexamined Japanese Patent Publication No.2002-353865.

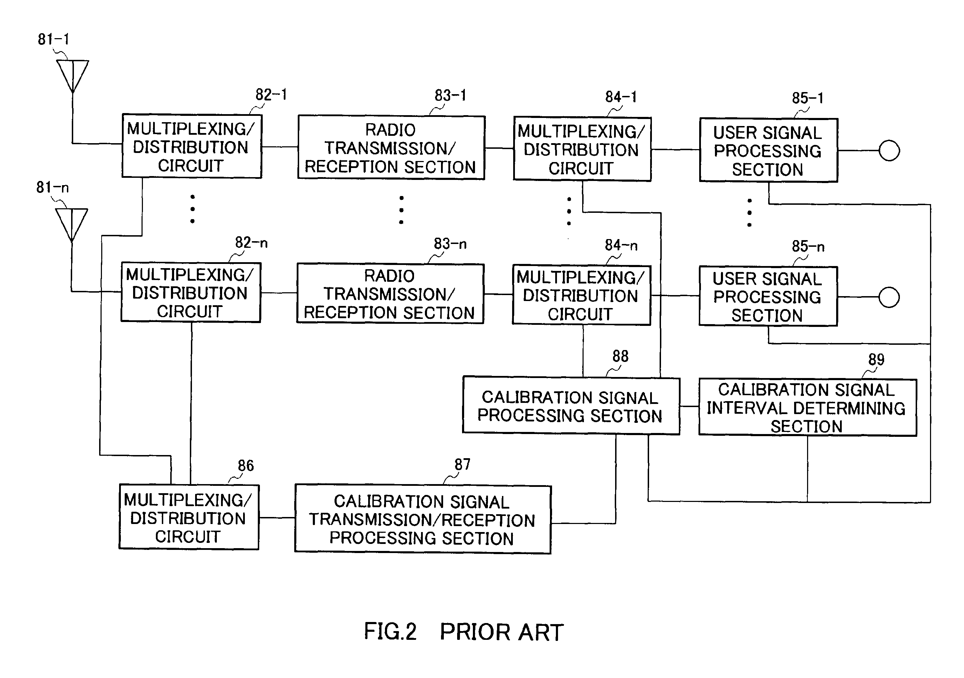

FIG.2 shows the configuration of a radio apparatus according to an adaptive array antenna scheme described in Unexamined Japanese Patent Publication No.2002-353865. This radio apparatus is provided with n radio signal processing sections each made up of antenna section 81, multiplexing/distribution circuit 82, radio transmission/reception section 83, multiplexing/distribution circuit 84 and user signal processing section 85, and further provided with a calibration circuit made up of multiplexing/distribution circuit 86, calibration signal transmission/reception processing section 87, calibration signal processing section 88 and calibration signal interval determining section 89.

Next, a method of calibrating the phases and amplitudes of signals received by n antenna sections 81 in the radio apparatus described in Unexamined Japanese Patent Publication No.2002-353865 will be explained together with the operations of components of this radio apparatus. In this radio apparatus, multiplexing/distribution circuit 82 multiplexes a signal received by each antenna section 81 with a calibration signal. The received signal multiplexed with the calibration signal is input to radio transmission/reception section 83, where the signal is subjected to publicly known signal processing such as amplification and demodulation. Then, the received signal is input to multiplexing/distribution circuit 84, where the calibration signal is extracted. All the calibration signals extracted by n multiplexing/distribution circuits 84 are input to calibration signal processing section 88 respectively. Calibration signal processing section 88 then compares the phases and amplitudes of the respective calibration signals and thereby calculates influences produced by signal processing at n radio transmission/reception sections 83, that is, distortion related to the phases and amplitudes among calibration signals. Calibration signal processing section 88 then inputs information about the distortion calculated for the plurality of radio signal processing sections to corresponding user signal processing sections 85. User signal processing section 85 which receives information about distortion applies weighting processing to the received signal input from multiplexing/distribution circuits 84 based on the information. This weighting processing calibrates the distortion of the received signals produced through signal processing at each radio transmission/reception section 83.

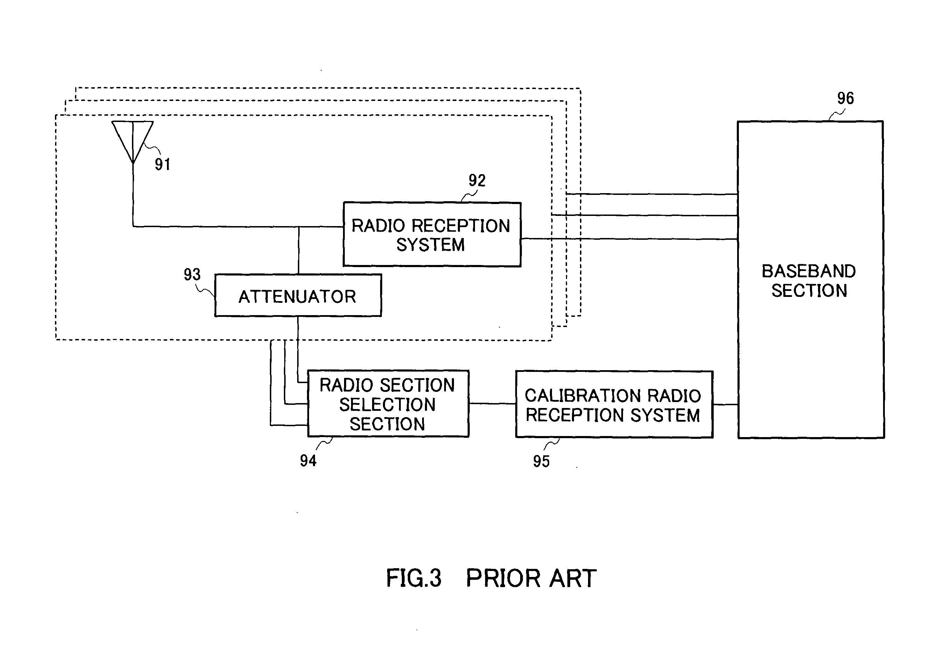

Furthermore, as another received signal calibration method, there is a method using a radio apparatus based on an adaptive array antenna scheme having the configuration illustrated in FIG.3. Operations of the components of this radio apparatus will be explainedbelow. A received signal captured by antenna element 91 is subjected to signal processing such as amplification, frequency down-conversion and quadrature demodulation at radio reception system 92 and then input to baseband section 96. Furthermore, this received signal is distributed between antenna element 91 and radio reception system 92 and this distributed received signal is input to calibration radio reception system 95 via attenuator 93 and radio section selection section 94. The received signal input to calibration radio reception system 95 is subjected to signal processing such as frequency down-conversion and quadrature demodulation and then input to baseband section 96. Baseband section 96 compares the received signal input via radio reception system 92 with the received signal input via calibration radio reception system 95 and measures the difference in the phase and amplitude between the received signals, that is, distortion of the received signal produced through signal processing at radio reception system 92. Through appropriate switchover in radio section selection section 94, the distortion of the received signals of the plurality of radio reception systems 92 are measured, the distortion is compensated by baseband section 96 and variations in the phases and amplitudes of received signals among the plurality of radio reception systems 92 are thereby suppressed. The compensation at this baseband section 96 enables this radio apparatus to acquire and maintain desired antenna directivity.

However, according to the received signal calibration method described in Unexamined Japanese Patent Publication No.2002-353865, if a calibration signal with small power is multiplexed with the received signal when the power level of a received signal is high, the received signal constitutes large noise to the calibration signal and the signal-to-noise ratio with reference to the calibration signal deteriorates producing a problem that the calibration accuracy of the received signal deteriorates. In addition, according to the calibration method described in Unexamined Japanese Patent Publication No.2002-353865, when a calibration signal with large power is multiplexed with the received signal, there is a problem that unnecessary radiations are produced at antenna section 81.

Furthermore, with the radio apparatus described in FIG.3, when the power level of the received signal from antenna element 91 is low, there is also a problem that the received signal is likely to be influenced by noise and the calculation accuracy of the received signal deteriorates.

### Disclosure of Invention

It is an object of the present invention to provide an array antenna reception apparatus and a received signal calibration method thereof capable of calibrating a received signal with high accuracy without generating unnecessary radiations at an antenna element even when the power level of the received signal is low.

According to an aspect of the present invention, an array antenna reception apparatus comprises a reference signal generation section that generates a reference signal only when a reception level of a received signal is equal to or lower than a threshold, a plurality of reception sections that multiplex the reference signal with the received signal, an error calculation section that compares the received signal multiplexed with the reference signal with the reference signal to calculate an error of the received signal in the reception sections and a received signal processing section that corrects the received signal based on the calculated error of the received signal.

The above described array antenna reception apparatus preferably further comprises a selection section that selects the reception section that extracts the received signal from among the plurality of reception sections and a calibration reception section that provides the received signal extracted by the selection section to the error calculation section as a calibration signal, the reference signal generation section provides the reference signal generated to the calibration reception section and the calibration reception section multiplexes the provided reference signal with the received signal and provides the multiplexed signal to the error calculation section.

The above described array antenna reception apparatus preferably further comprises a power ratio calculation section that calculates a ratio of a power level of the reference signal to noise in the received signal multiplexed with the reference signal and adjusts the power level of the reference signal according to the calculated power level ratio.

In the above described array antenna reception apparatus, the power ratio calculation section preferably calculates a power level ratio of the reference signal to the noise for each user and adjusts the power level of the reference signal according to the calculated power level ratio.

The above described array antenna reception apparatus preferably further comprises a selection section that selects the reception section that extracts the received signal from among the plurality of reception sections, a calibration reception section that provides the received signal extracted by the selection section to the error calculation section as a calibration signal and a switching section that connects any one of the calibration reception section and the reference signal generation section to the selection section.

The above described array antenna reception apparatus preferably further comprises a selection section that selects the reception section that extracts the received signal from among the plurality of reception sections and a calibration reception section that provides the received signal extracted by the selection section to the error calculation section as a calibration signal, and the reception sections comprise a directivity coupler provided with an input terminal, a terminal having directivity with respect to the input terminal, a terminal having opposite directivity with respect to the input terminal and a terminal having no directivity with respect to the input terminal, and when the received signal is input to the input terminal of the directivity coupler, the calibration reception section is connected to the terminal having directivity with respect to the input terminal via the selection section, the reference signal is input to the terminal having opposite directivity with respect to the input terminal and the received signal processing section is connected to the terminal having no directivity with respect to the input terminal.

The above described array antenna reception apparatus preferably further comprises a selection section that selects the reception section that extracts the received signal from among the plurality of reception sections and a calibration reception section that provides the received signal extracted by the selection section to the error calculation section as a calibration signal, and the reception sections comprise two directivity couplers provided with an input terminal, a terminal having directivity with respect to the input terminal, a terminal having opposite directivity with respect to the input terminal and a terminal having no directivity with respect to the input terminal, and when the received signal is input to the input terminal of one of the directivity coupler, the calibration reception section is connected to the terminal having directivity with respect to the input terminal via the selection section and a terminal end is connected to the terminal having opposite directivity with respect to the input terminal and an input terminal of the other directivity coupler is connected to the terminal having no directivity with respect to the input terminal and further, a terminal end is connected to the terminal having directivity with respect to the input terminal of the other directivity coupler and the reference signal is input to the terminal having opposite directivity with respect to the input terminal and the received signal processing section is connected to the terminal having no directivity with respect to the input terminal.

According to another aspect of the present invention, a received signal calibration method comprises a measuring step of measuring a power level of a received signal, a reference signal generation step of generating a reference signal only when the measured power level of the received signal is equal to or lower than a threshold, a multiplexing step of multiplexing the reference signal with the received signal, an error calculation step of calculating an error of the received signal caused by signal processing on the received signal by comparing the power level of the received signal multiplexed with the reference signal with the power level of the reference signal and a received signal processing step of correcting the received signal based on the calculated error of the received signal.

### Brief Description of Drawings

FIG.1 is a block diagram showing the configuration of a radio apparatus based on a conventional adaptive array antenna scheme;
FIG.2 is a block diagram showing the configuration of another radio apparatus based on the conventional adaptive array antenna scheme;
FIG.3 is a block diagram showing the configuration of a further radio apparatus based on the conventional adaptive array antenna scheme;
FIG.4 is a block diagram showing the configuration of an array antenna reception apparatus according to Embodiment 1 of the present invention;
FIG.5 is a block diagram showing the configuration of an array antenna reception apparatus according to Embodiment 2 of the present invention;
FIG.6 is a block diagram showing the configuration of an array antenna reception apparatus according to Embodiment 3 of the present invention;
FIG.7 is a block diagram showing the configuration of an array antenna reception apparatus according to Embodiment 4 of the present invention;
FIG.8 is a block diagram showing the configuration of an array antenna reception apparatus according to Embodiment 5 of the present invention; and
FIG.9 is a block diagram showing the configuration of an array antenna reception apparatus according to Embodiment 6 of the present invention.

### Best Mode for Carrying out the Invention

With reference now to the attached drawings, embodiments of the present invention will be explained in detail below.

### (Embodiment 1)

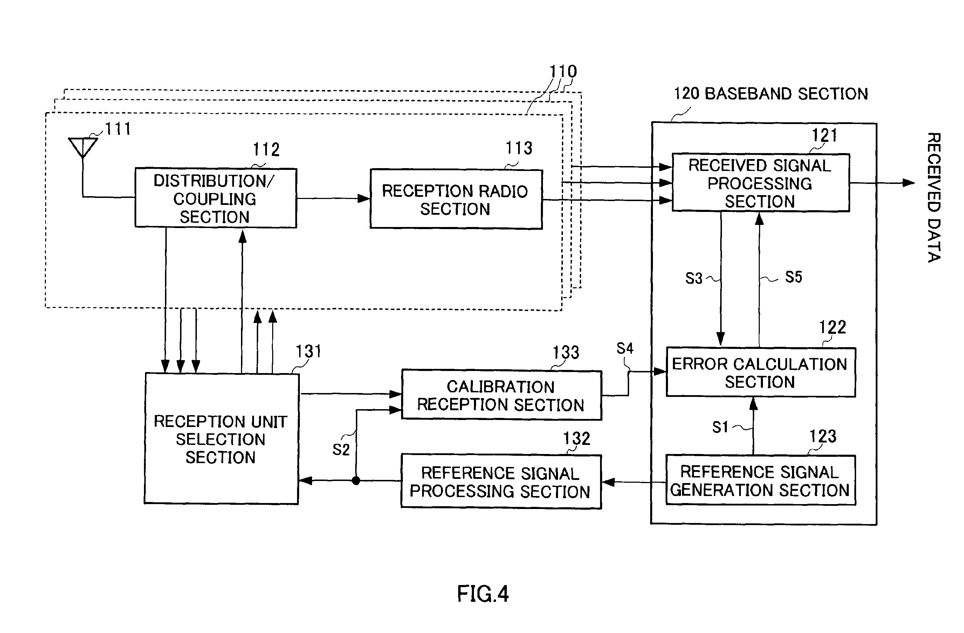

FIG.4 is a block diagram showing the configuration of an array antenna reception apparatus according to Embodiment 1 of the present invention. The array antenna reception apparatus according to this embodiment is a reception apparatus based on an adaptive array antenna scheme and is provided with a plurality of reception units 110, baseband section 120, reception unit selection section 131, reference signal processing section 132 and calibration reception section 133. Furthermore, reception unit 110 is provided with antenna section 111, distribution/coupling section 112 and reception radio section 113. On the other hand, baseband section 120 is provided with received signal processing section 121, error calculation section 122 and reference signal generation section 123.

Antenna section 111 receives a radio signal transmitted from the other communication party. Furthermore, a plurality of antenna sections 111 are regularly arranged to constitute an array antenna.

Distribution/coupling section 112 is constructed of a capacitor and distributor/combiner or the like, distributes a received signal input from antenna section 111 into at least two paths and then multiplexes the received signal in one path with a reference signal generated by reference signal generation section 123. Distribution/coupling section 112 is preferably provided with a band pass filter or the like that can shut off a reference signal so as to prevent the reference signal from entering antenna section 111.

Reception radio section 113 is constructed of a low-noise amplifier, mixer and attenuator or the like and performsamplification,frequencyconversionandgain adjustment of the received signal.

Received signal processing section 121 is provided with a measuring instrument for measuring the power levels and phases of the received signal and reference signal, measures those power levels and phases all the time or periodically and inputs measured data S3 to error calculation section 122. Furthermore, received signal processing section 121 is also provided with a low-noise amplifier, weighting unit or modulator or the like and applies predetermined signal processing to the received signal so that the received signal has a desired amplitude and phase based on error correction information S5 input from error calculation section 122. Furthermore, received signal processing section 121 is provided with a demodulator or the like, demodulates the received signal and outputs it as received data.

Error calculation section 122 stores measured data about the power levels and phases of the received signal and reference signal input from received signal processing section 121 in a provided memory for each reception unit 110. Furthermore, error calculation section 122 is provided with a measuring instrument for measuring the power level and the phase of calibration signal S4 input from calibration reception section 133 and is also provided with a comparator that compares the power level and phase or the like of calibration signal S4 with measured data S3 stored in the memory and input from received signal processing section 121. Furthermore, error calculation section 122 uses the provided comparator to compare the frequency, phase and power level of the received signal or reference signal for each reception unit 110 with the phase or the like of calibration signal S4 corresponding to reception unit 110 and calculate the difference between the received signal or reference signal for each reception unit 110 and corresponding calibration signal S4, that is, an error of the received signal for each reception unit 110. Error calculation section 122 inputs error correction information S5 to received signal processing section 121 instructing it to correct the frequency, phase, amplitude or the like of the received signal of each reception unit 110 based on the calculated error of the received signal for each reception unit 110 so as to display ideal antenna directivity when received signal processing section 121 outputs the received signal as received data.

Furthermore, error calculation section 122 is provided with a comparator that compares the phase or the like of reference signal S1 input from reference signal generation section 123 with the phase or the like of calibration signal S4 multiplexed with the reference signal. Here, reference signal S1 is generated by reference signal generation section 123 and then directly input to error calculation section 122 and also input to error calculation section 122 via reference signal processing section 132 and calibration reception section 133. Therefore, error calculation section 122 compares reference signal S1 with calibration signal S4 with the reference signal multiplexed, and can thereby measure distortion produced in the reference signal through signal processing at reference signal processing section 132 and calibration reception section 133. Error calculation section 122 can grasp the characteristic regarding the signal processing by calibration reception section 133 based on the measured distortion of the reference signal, and can thereby further increase the error calculation accuracy of the received signal by using the grasped characteristic. Namely, this is synonymous with improving the effectiveness of error correction information S5 and when the error calculation accuracy of the received signal improves, antenna directivity of the array antenna reception apparatus according to this embodiment can be displayed more definitely.

Reference signal generation section 123 is provided with a clock oscillator or the like and generates a reference signal of a predetermined frequency and amplitude. Reference signal generation section 123 generates a reference signal only when the power level of a received signal measured by received signal processing section 121 is equal to or lower than a predetermined threshold based on an instruction from baseband section 120. Therefore, when the power level of the received signal is sufficiently high, reference signal generation section 123 generates no reference signal.

Reception unit selection section 131 is constructed of a semiconductor switch or the like, selects any one of a plurality of reception units as appropriate or periodically and inputs a received signal from distribution/coupling section 112 of the selected reception unit.

Reference signal processing section 132 is constructed of an amplifier, mixer or attenuator or the like and applies signal processing such as amplification, frequency conversion or gain adjustment on the reference signal input from reference signal generation section 123.

Calibration reception section 133 is constructed of a low-noise amplifier, mixer and attenuator or the like and applies signal processing such as amplification, frequency conversion and gain adjustment or the like to the received signal distributed by distribution/coupling section 112 input from reception unit selection section 131. Furthermore, calibration reception section 133 is also provided with a capacitor and distributor/combiner or the like and multiplexes reference signal S2 input from reference signal processing section 132 with the received signal input from reception unit selection section 131.

Next, the operation of the array antenna reception apparatus according to this embodiment will be explained. First, a case where the power level of a received signal captured by antenna section 111 of reception unit 110 is sufficiently high will be explained. In this case, reference signal generation section 123 does not operate and generates no reference signal.

The received signal received by antenna section 111 is input to distribution/coupling section 112 and distributed to two paths; path directed to reception radio section 113 and path directed to reception unit selection section 131. The reception radio section 113 applies publicly known signal processing such as amplification, frequency conversion and gain adjustment or the like to the received signal. Then, received signal processing section 121 measures the frequency, phase and power level (amplitude) of the received signal. Note that the aforementioned measurement of the received signal by received signal processing section 121 is carried out for each reception unit 110. Then, measured data S3 on the frequency, phase and power level of the received signal for each reception unit 110 is input from received signal processing section 121 to error calculation section 122 and stored in memory.

On the other hand, the received signal in the other path distributed by distribution/coupling section 112 is input to calibration reception section 133 when reception unit 110 to which it belongs is selected by reception unit selection section 131. The received signal input to calibration reception section 133 is subjected to publicly known signal processing such as amplification, frequency conversion and gain adjustment or the like and then input to error calculation section 122 as calibration signal S4. Error calculation section 122 compares the frequency, phase and power level or the like of measured data S3 of each reception unit 110 stored in memory with those of corresponding calibration signal S4 and calculates the difference of measured data S3 of each reception unit 110 with reference to calibration signal S4, that is, the error of the received signal. Then, error correction information S5 is generated to calibrate the error of this calculated received signal and this error correction information S5 is input from error calculation section 122 to received signal processing section 121. Received signal processing section 121 calibrates the received signal for each reception unit 110 so that the received signal indicates ideal antenna directivity based on error correction information S5.

When the power level of the received signal is sufficiently high, the array antenna reception apparatus according to this embodiment distributes the received signal without generating any reference signal, uses it as calibration signal S4, and can thereby effectively calibrate the received signal so that the received signal indicates ideal antenna directivity. Furthermore, in such a case, the calculation accuracy of the received signal rather improves when the reference signal is not generated. This is because even when the received signal is multiplexed with a reference signal at a low power level when the power level of the received signal is high, the reference signal cannot be extracted due to the power level difference and the multiplexed reference signal simply constitutes noise to the received signal. In addition, if the power level of the reference signal to be multiplexed is increased in accordance with the power level of the received signal, unnecessary radiations are generated in antenna section 111.

However, when the power level of the received signal captured by the antenna section 111 of the reception unit 110 is low, the deterioration of the received signal derived from factors such as thermal noise that can be hardly removed becomes apparent, and errors of the received signal also increase accordingly and it is no longer possible to accurately calibrate the received signal with only the calibration signal which is a distributed received signal. Therefore, when the reception level of the received signal is low, it is necessary to use a calibration signal other than the distributed received signal, that is, a reference signal of this embodiment.

Next, the operation of the array antenna reception apparatus according to this embodiment when the power level of the received signal captured by the antenna section 111 of the reception unit 110 is equal to or lower than a preset threshold will be explained. Note that explanations which overlap the case where the power level of the above described received signal is sufficiently high will be omitted.

When received signal processing section 121 detects that the power level of the majority of the plurality of received signals input from the plurality of reception units 110 to received signal processing section 121 have become equal to or lower than a predetermined threshold, the baseband section 120 inputs an operation start command to reference signal generation section 123. Following this operation start command, reference signal generation section 123 generates a reference signal having a predetermined frequency and amplitude using a provided clock generator. Reference signal generation section 123 then directly inputs (S1) the reference signal generated to error calculation section 122 and also inputs it to reference signal processing section 132. The reference signal input to reference signal processing section 132 is subjected to signal processing such as amplification, frequency conversion or gain adjustment and then input to reception unit selection section 131 and calibration reception section 133 (S2). The reference signal input to reception unit selection section 131 is input to distribution/coupling section 112 of reception unit 110 selected by reception unit selection section 131 and multiplexed with the received signal by distribution/coupling section 112. This distribution/coupling section 112 is preferably provided with a band pass filter or the like which shuts off the reference signal to prevent the reference signal from entering antenna section 111 and causing unnecessary radiations when the reference signal is multiplexed with the received signal. The received signal multiplexed with this reference signal is subjected to predetermined signal processing by reception radio section 113 and received signal processing section 121. Received signal processing section 121 separates the received signal multiplexed with reference signal into the reference signal and received signal, generates information about the frequency, phase and power level of the reference signal and received signal respectively, and error calculation section 122 for each reception unit 110 stores information S3 thereof.

On the other hand, reference signal S2 input from reference signal processing section 132 to calibration reception section 133 is multiplexed with the received signal input from reception unit selection section 131 at calibration reception section 133 in such a way as to have a predetermined power level ratio and then input to error calculation section 122.

Error calculation section 122 compares the frequency, phase and power level between measured data S3 of each reception unit 110 stored in the provided memory, calibration signal S4 corresponding to this measured data S3, that is, whose source of the received signal is the same reception unit 110 as data S3 and reference signal S1 respectively and calculates an error of the received signal. Then, error correction information S5 to calibrate errors of the calculated received signal is generated and this error correction information S5 is input to received signal processing section 121. Received signal processing section 121 calibrates the received signal according to error correction information S5 for each reception unit 110 so that the received signal indicates ideal antenna directivity.

In the present invention, a specific value of the threshold which becomes a standard value for reference signal generation section 123 to start operation is not specified. This is because the threshold corresponding to the reference signal that can improve the calculation accuracy of the received signal differs depending on the configuration of the array antenna reception apparatus and operating environment.

In this way, the array antenna reception apparatus according to this embodiment, when the power level of the received signal is higher than a predetermined threshold, distributes the received signal and use it as a calibration signal without generating any reference signal. On the other hand, the array antenna reception apparatus according to this embodiment, when the power level of the received signal is equal to or lower than the predetermined threshold, generates a reference signal and uses the reference signal as a calibration signal and therefore it is possible to adaptively maintain the high calculation accuracy of the received signal so that antenna directivity of the received signal is indicated effectively all the time according to the power level of the received signal.

Furthermore, the array antenna reception apparatus according to this embodiment does not generate any reference signal when the reception level of the received signal is higher than the predetermined threshold, and therefore antenna section 111 does not produce any unnecessary radiations caused by the reference signal.

The array antenna reception apparatus according to this embodiment may be applied or modified as follows.

This embodiment has explained the case where a threshold is set based on the power level of the received signal and power level of the reference signal, but the present invention is not limited to this case and it is also possible to use, for example, signal to noise ratio (SNR) or signal to interference ratio (SIR).

This embodiment has explained the case where reference signal processing section 132 inputs reference signal S2 to calibration reception section 133, but the present invention is not limited to this and adapted so that reference signal S2 is not input from calibration reception section 133. Thus, even when reference signal S2 is not input to calibration reception section 133, reference signal S1 is directly input from reference signal generation section 123 to error calculation section 122, and therefore error calculation section 122 can generate error correction information S5 for measured data S3 input from received signal processing section 121 to error calculation section 122.

Furthermore, this embodiment has explained the case where the calibration reception section 133 multiplexes the received signal and reference signal distributed by distribution/coupling section 112 even when the power level of the received signal is low and a reference signal is generated, but the present invention is not limited to this and may also be adapted so that a received signal is not input from reception unit selection section 131 to calibration reception section 133 when, for example, a reference signal is generated. In this way, calibration signal S4 input from calibration reception section 133 to error calculation section 122 is made up of only the reference signal, and therefore, it is possible to prevent the received signal in calibration signal S4 frombecoming noise to the reference signal and deteriorating calibration signal S4.

### (Embodiment 2)

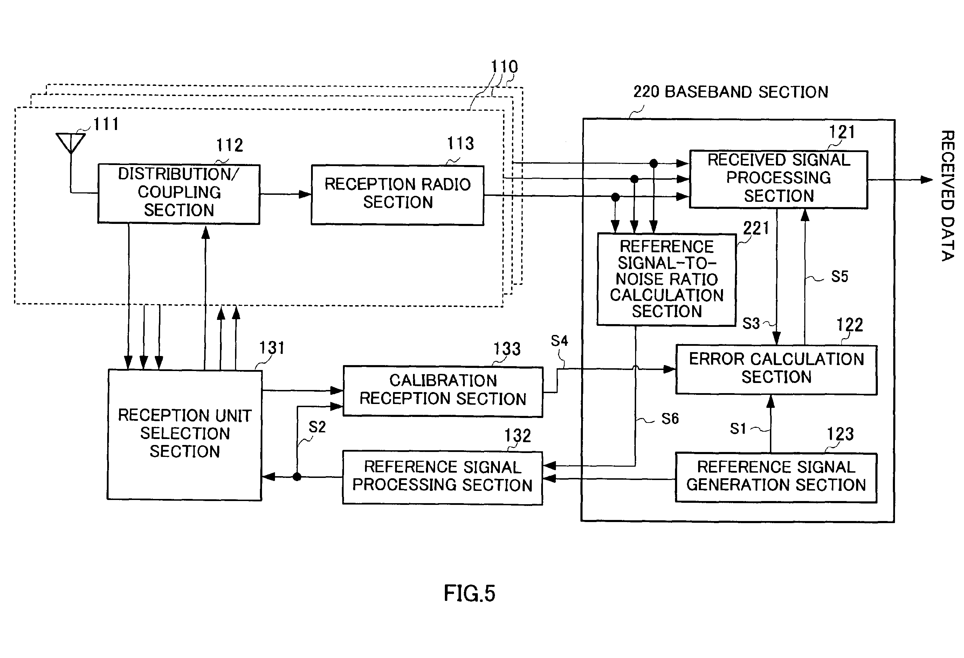

FIG.5 shows the configuration of an array antenna reception apparatus according to Embodiment 2 of the present invention. The array antenna reception apparatus according to this embodiment corresponds to the array antenna reception apparatus according to Embodiment 1 provided with baseband section 220 instead of baseband section 120, with reference signal-to-noise ratio calculation section 221 added to baseband section 120. Therefore, many components of the array antenna reception apparatus according to this embodiment exercise the same functions as those of the array antenna reception apparatus in Embodiment 1. Thus, the components displaying the same functions are assigned the same reference numerals and explanations thereof will be omitted.

When a received signal multiplexed with a reference signal is input from each reception unit 110 to received signal processing section 121, reference signal-to-noise ratio calculation section 221 receives each received signal which is distributed before being input to received signalprocessingsection 121. Here, for example, assume that distribution/coupling section 112 makes a setting such that a reference signal is multiplexed with the received signal at +10 dB with respect thereto and that the calculation accuracy of the received signal at received signal processing section 121 falls drastically when a reference signal-to-noise ratio (SNR) falls below 0 dB. Under this assumption, when the power level of the received signal falls, the power level of the reference signal also falls accordingly. For this reason, when the array antenna reception apparatus is used in a weak electric field region, the influence of thermal noise on the reference signal relatively increases and the reference signal-to-noise ratio falls below 0 dB. Therefore, for the received signal multiplexed with the reference signal input to reference signal-to-noise ratio calculation section 221, this embodiment calculates the ratio of the power level of the reference signal to the power level of other noise and inputs control signal S6 for controlling gains from reference signal-to-noise ratio calculation section 221 to reference signal processing section 132 such that this power level ratio is always kept to 0 dB or higher.

As mentioned above, according to the array antenna reception apparatus of this embodiment, even when the received signal is a weak electric field, it is possible to keep the reference signal-to-noise ratio to a value that prevents deterioration of the calculation accuracy, and therefore reliably improve the calculation accuracy of antenna directivity even when the received signal is a weak electric field.

### (Embodiment 3)

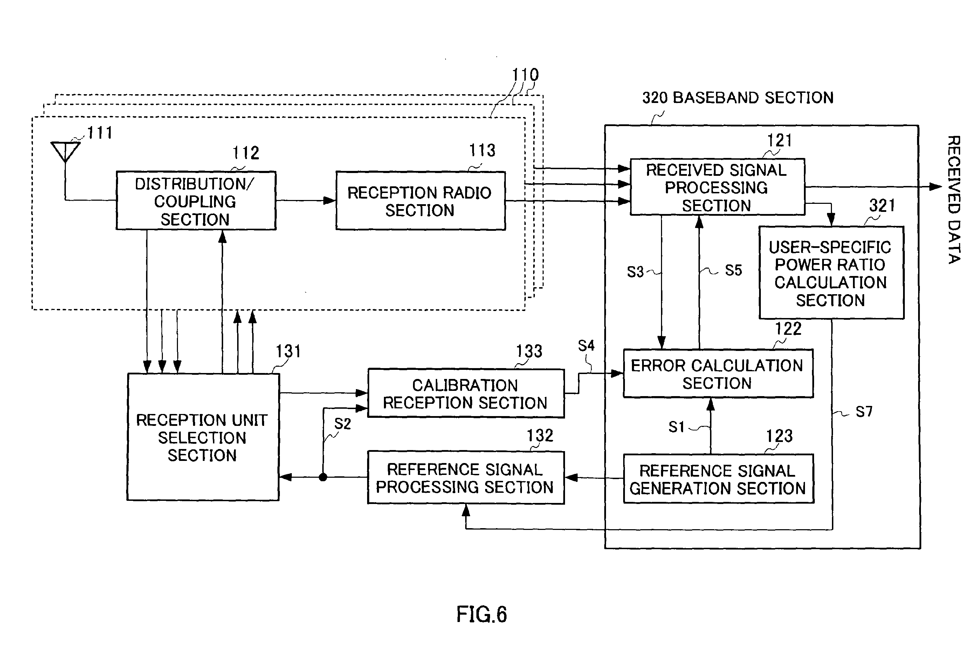

FIG.6 shows the configuration of an array antenna reception apparatus according to Embodiment 3 of the present invention. The array antenna reception apparatus according to this embodiment corresponds to the array antenna reception apparatus according to Embodiment 1 provided with baseband section 320 instead of baseband section 120, with user-specific power ratio calculation section 321 added to baseband section 120. Therefore, many components of the array antenna reception apparatus according to this embodiment exercise the same functions as those of the array antenna reception apparatus of Embodiment 1. Thus, the components displaying the same functions are assigned the same reference numerals and explanations thereof will be omitted.

The array antenna reception apparatus receives received signals from a plurality of users using a publicly known multiple access scheme such as CDMA (code division multiple access). These received signals are input to received signal processing section 121, where the signals are divided into user-specific received signals. These user-specific received signals are input from received signal processing section 121 to user-specific power ratio calculation section 321, where the power levels of user-specific reception power are calculated. Based on the calculated power levels of the user-specific received signals, user-specific power ratio calculation section 321 selects a user corresponding to the received signal at a lowest power level. Furthermore, user-specific power ratio calculation section 321 inputs control signal S7 for controlling gains to reference signal processing section 132 such that when the power level of the reference signal is assumed to constitute an interference signal to the power level of the received signal of the selected user, distribution/coupling section 112 multiplexes those signals at a signal-to-interference ratio (SIR) of, for example, +10dB. When communications with a plurality of users are simultaneously performed under the CDMA scheme, the power level of the reference signal actually multiplexed with the received signal by distribution/coupling section 112 corresponds to a power level obtained by multiplying the power level of the reference signal calculated for the user corresponding to the received signal at the lowest power level by the number of users with whom simultaneous communications are performed.

The array antenna reception apparatus according to this embodiment makes it possible to avoid the problem which occurs when a power level of a reference signal to be multiplexed with received signals is set based on a state in which received signals from all users are multiplexed, that is, the problem that the reference signal constitutes a large interference signal to users having received signals at low power levels and deteriorates communication quality. In other words, the array antenna reception apparatus according to this embodiment sets the power level of the actually multiplexed reference signal so that the SIR becomes a ratio at a predetermined power level based on the minimum power level for the divided user-specific received signal, and therefore, it is possible to inhibit adverse effect on the received signal caused by the reference signal that becomes a large interference signal and consequently deteriorating communication quality of users whose having received signals at low power levels.

### (Embodiment 4)

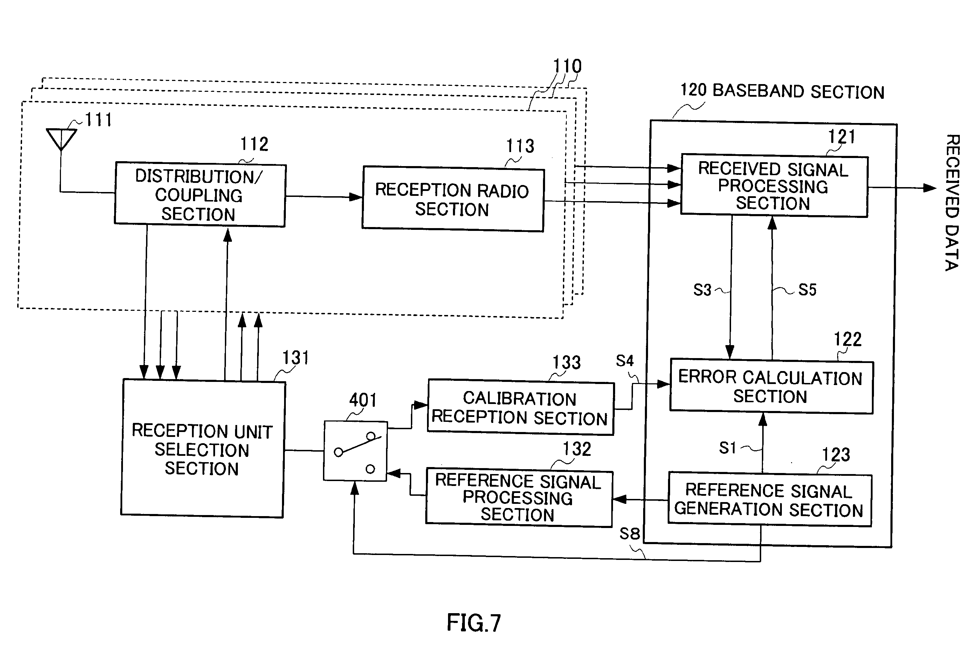

FIG.7 shows the configuration of an array antenna reception apparatus according to Embodiment 4 of the present invention. The array antenna reception apparatus according to this embodiment corresponds to the array antenna reception apparatus according to Embodiment 1 with switching unit 401 interposed between and connected to reception unit selection section 131, calibration reception section 133 and reference signal processing section 132. This switching unit 401 selectively connects reception unit selection section 131 and any one of reference signal processing section 132 and calibration reception section 133. Therefore, in this embodiment, reference signal S2 is not input from reference signal processing section 132 to calibration reception section 133.

Next, the configuration and operation of the array antenna reception apparatus according to this embodiment will be explained. Many components of the array antenna reception apparatus according to this embodiment display the same functions as those of the array antenna reception apparatus of Embodiment 1. Thus, the components displaying the same functions are assigned the same reference numerals and explanations thereof will be omitted.

Switching unit 401 is constructed of, for example, a semiconductor switch, which connects calibration reception section 133 and reception unit selection section 131 when the power level of a received signal is higher than a predetermined threshold. At this time, reference signal processing section 132 is completely separated from calibration reception section 133. On the other hand, when the power level of the received signal is equal to or lower than a predetermined threshold, switching unit 401 connects reception unit selection section 131 and reference signal processing section 132 according to switching signal S8 input from reference signal generation section 123 which has started to operate. At this time, reference signal processing section 132 is completely separated from calibration reception section 133, too. Furthermore, when reference signal generation section 123 stops its operation, switching unit 401 receives switching signal S8 from reference signal generation section 123 again and reconnects reception unit selection section 131 and calibration reception section 133.

As shown above, in the array antenna reception apparatus according to this embodiment, reference signal processing section 132 and calibration reception section 133 are completely separated and, when the power level of a received signal is higher than a predetermined threshold, an impedance variation at the output end of reference signal processing section 132 does not affect the input end of calibration reception section 133, and therefore, it is possible to suppress deterioration of received signals at calibration reception section 133. Furthermore, in the array antenna reception apparatus according to this embodiment reference signal processing section 132 and calibration reception section 133 are completely separated also when the power level of the received signal is equal to or lower than a predetermined threshold, and an impedance variation at the input end of calibration reception section 133 does not affect the output end of reference signal processing section 132, and it is therefore possible to suppress deterioration of the reference signal multiplexed with the received signals.

### (Embodiment 5)

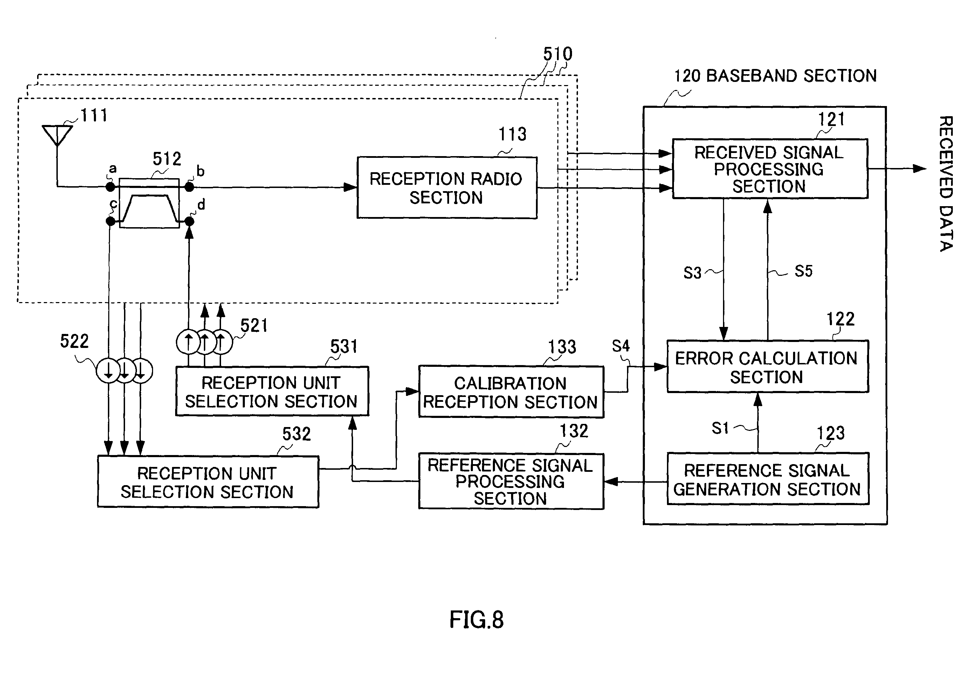

FIG.8 shows the configuration of an array antenna reception apparatus according to Embodiment 5 of the present invention. The array antenna reception apparatus according to this embodiment corresponds to the array antenna reception apparatus in Embodiment 1 provided with reception unit 510 including directivity coupler 512 instead of distribution/coupling section 112 and also provided with two reception unit selection sections 531 and 532 instead of reception unit selection section 131, connected to terminals of directivity coupler 512 respectively. Furthermore, the array antenna reception apparatus according to this embodiment is provided with isolators 521, 522 between directivity coupler 512 and reception unit selection sections 531, 532 respectively. Note that reception unit selection sections 531,532 are used as substitutes for reception unit selection section 131 and have functions similar to those of reception unit selection section 131.

Next, the configuration and operation of the array antenna reception apparatus according to this invention will be explained. Many components of the array antenna reception apparatus according to this embodiment exercises the same functions as those of the array antenna reception apparatus of Embodiment 1. Thus, the components displaying the same functions are assigned the same reference numerals and explanations thereof will be omitted.

Directivity coupler 512 is provided with four terminals; input terminal a (hereinafter simply referred to as "input terminal a" through which a received signal is input when connected to antenna section 111) , terminal b which has no directivity with respect to the input terminal connected to received signal processing section 121 via reception radio section 113 (hereinafter simply referred to as "non-directional terminal b"), terminal c having directivity with respect to the input terminal connected to reception unit selection section 532 via isolator 522 (hereinafter simply referred to as "directional terminal c") and terminal d having opposite directivity with respect to the input terminal connected to reception unit selection section 531 via isolator 521 (hereinafter simply referred to as "opposite terminal d"). Here, for example, assume that the degree of coupling of directivity coupler 512 is 20 dB and isolation thereof is 60 dB. Then, a reference signal input from opposite terminal d is attenuated by 20 dB, multiplexed with a received signal input from input terminal a and output from non-directional terminal b to reception radio section 113. In this way, the reason why the reference signal is multiplexed with the received signal attenuated by 20 dB is that non-directional terminal b indicates directivity with respect to opposite terminal d. The reference signal input from opposite terminal d is output from input terminal a attenuated by 60 dB. Therefore, using this directivity coupler 512 does not allow substantially reference signal to enter antenna section 111, and therefore there is no such problem that unnecessary radiations occur in antenna section 111.

Thus, according to the array antenna reception apparatus according to this invention, there is a high degree of isolation between input terminal a and opposite terminal d, and therefore it is possible to effectively inhibit the reference signal from entering antenna section 111 even when the reference signal is multiplexed with the received signal, consequently preventing antenna section 111 from generating unnecessary radiations. Furthermore, the array antenna reception apparatus according to this invention is provided with isolators 521, 522, whereby even when an impedance variation occurs in reference signal processing section 132, it is possible to prevent the influence thereof on calibration reception section 133 and even when an impedance variation occurs in calibration reception section 133, it is likewise possible to prevent the influence thereof on reference signal processing section 132.

Note that the array antenna reception apparatus according to this invention may be applied or modified as follows.

This embodiment explains the case where isolators 521, 522 are used, but the present invention is not limited to this and it is possible to use, for example, single-pole double-throws (SPDT) instead of isolators 521, 522. When two SPDTs are used in this way, it is preferable to control the two SPDTs interlocked with each other so that only one of reference signal processing section 132 and calibration reception section 133 is connected to directivity coupler 512.

### (Embodiment 6)

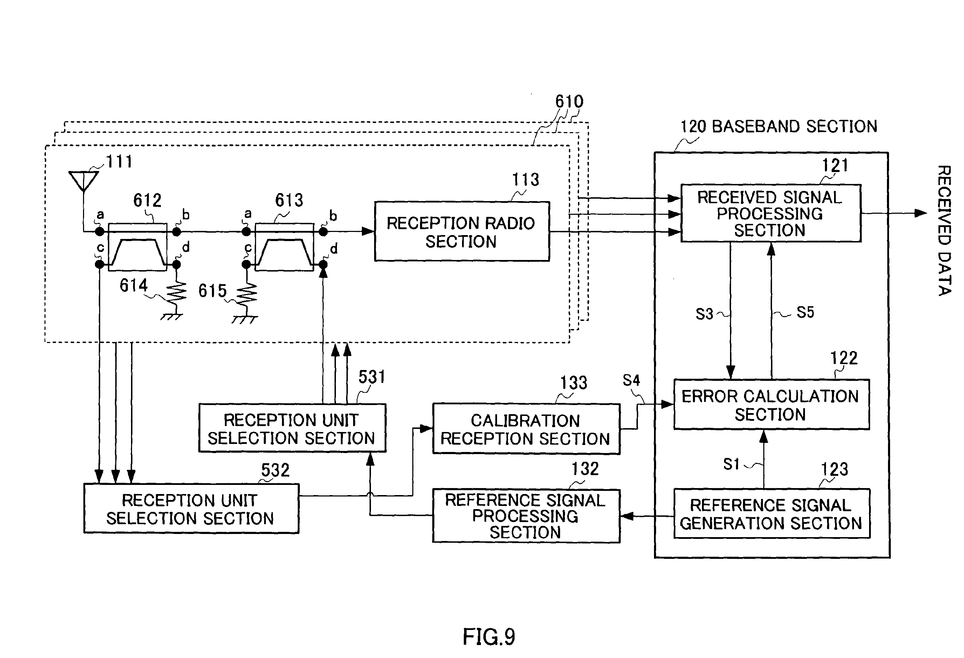

FIG.9 shows the configuration of an array antenna reception apparatus according to Embodiment 6 of the present invention. The array antenna reception apparatus according to this embodiment corresponds to the array antenna reception apparatus in Embodiment 5 provided with reception unit 610 including directivity couplers 612, 613 coupled together instead of directivity coupler 512 of reception unit 510. Therefore, many components of the array antenna reception apparatus according to this embodiment exercises the same functions as those of the array antenna reception apparatus of Embodiment 5. The configuration and operation of the array antenna reception apparatus according to this invention will be explained below, but the components displaying the same functions as those of the array antenna reception apparatus of Embodiment 5 are assigned the same reference numerals and explanations thereof will be omitted.

For directivity couplers 612, 613, ones having the same functions as those of directivity coupler 512 in Embodiment 5 can be used. Thus, for the four terminals of directivity couplers 612, 613, the same notation as for directivity coupler 512 is introduced designating a terminal to which a received signal is input as input terminal a, a terminal having no directivity with respect to input terminal a as non-directional terminal b, a terminal having directivity with respect to input terminal a as directional terminal c and a terminal having opposite directivity with respect to input terminal a as opposite terminal d.

Antenna section 111 is connected to input terminal a of directivity coupler 612 and a received signal is input thereto from antenna section 111. Furthermore, input terminal a of directivity coupler 613 is connected to non-directional terminal b of directivity coupler 612. Furthermore, calibration reception section 133 is connected to directional terminal c of directivity coupler 612 via reception unit selection section 532. Furthermore, termination resistor 614 is connected to opposite terminal d of directivity coupler 612 so as not to produce unnecessary reflection. Furthermore, received signal processing section 121 is connected to non-directional terminal b of directivity coupler 613 via reception radio section 113. Furthermore, termination resistor 615 is connected to directional terminal c of directivity coupler 613 so as not to produce unnecessary reflection. Furthermore, reference signal processing section 132 is connected to opposite terminal d of directivity coupler 613 via reception unit selection section 531.

Here, suppose the coupling degree of directivity couplers 612, 613 is 20 dB as in the case of Embodiment 5 and isolation thereof is 60 dB. Then, since directivity couplers 612, 613 are interposed between reference signal processing section 132 and calibration reception section 133, if connection states of those terminals are taken into consideration, isolations of directivity couplers 612, 613 act in a superimposed manner between reference signal processing section 132 and calibration reception section 133, and therefore an isolation of a total of 120 dB is secured. Therefore, even when impedance variations occur in reference signal processing section 132 and calibration reception section 133 respectively, influences thereof will never exert upon other parts.

Furthermore, a reference signal is input from opposite terminal d of directivity coupler 613 attenuated by 20 dB and multiplexed with a received signal input from input terminal a. Furthermore, even when the reference signal is input to antenna section 111, it is attenuated by 60 dB when output from input terminal a of directivity coupler 613, and therefore it is possible to sufficiently reduce unnecessary radiations from antenna section 111.

Thus, according to the array antenna reception apparatus of this invention, adjusting the connection modes of the terminals of directivity couplers 612, 613 makes it possible to effectively attenuate the power level of the reference signal input to antenna section 111. As a result, it is possible for the array antenna reception apparatus according to this invention reduce unnecessary radiations output from antenna section 111.

Furthermore, according to the array antenna reception apparatus of this invention, the connection modes of the terminals of directivity couplers 612, 613 is adjusted and therefore, it is possible to secure sufficient isolations between reference signal processing section 132 and calibration reception section 133. For this reason, when an impedance variation occurs in any one of reference signal processing section 132 and calibration reception section 133, it is possible to effectively inhibit influences thereof from exerting upon other parts without providing any isolator between directivity couplers 612, 613 and reference signal processing section 132 and between directivity couplers 612, 613 and calibration reception section 133. Therefore, the array antenna reception apparatus according to this embodiment requires no isolator, and can thereby reduce the size of the apparatus.

Therefore, when the power level of a received signal is high, the present invention distributes the received signal and uses it as a calibration signal, and on the other hand when the reception level of the received signal is low, the present invention generates a reference signal and uses the reference signal as a calibration signal, and therefore even when the reference signal is multiplexed with the received signal, it is possible to effectively inhibit the reference signal from becoming noise to the received signal and deteriorating the calculation accuracy of the received signal. In other words, according to the present invention, a reference signal is generated only when the reception level of the received signal is equal to or lower than a predetermined threshold, and therefore when a reference signal is not necessary as the calibration signal, the reference signal is not multiplexed with the received signal, and therefore it is possible to prevent the reference signal from becoming noise to the received signal and deteriorating the received signal.

Furthermore, according to the present invention, the received signal multiplexed with the reference signal is provided to the error calculation section as a calibration signal, and therefore, it is possible to detect distortion of the calibration signal itself.

Furthermore, according to the present invention, the power level of the reference signal multiplexed with the received signal is adjusted according to the ratio of the power level of the reference signal to the power level of noise, and therefore, it is possible to keep the reference signal-to-noise ratio to a value preventing deterioration of the calculation accuracy of the received signal even when the received signal is a weak electric field.

Furthermore, according to the present invention, the power level of the reference signal multiplexed with the received signal is adjusted based on the user-specific reference signal-to-noise ratio, and it is possible to thereby avoid the problem that the reference signal constitutes a large interference signal to users having received signals at low power levels, deteriorating the communication quality.

Furthermore, t a switching section provided in the present invention makes it possible to completely separate the reference signal generation section from the calibration reception section.

Furthermore, according to the present invention, the respective components of the array antenna reception apparatus are connected to predetermined terminals of directivity couplers, and it is possible to thereby prevent the reference signal from generating unnecessary radiations and secure sufficient isolation between the reference signal generation section and calibration reception section.

Furthermore, according to the present invention, the respective components of the array antenna reception apparatus are connected to predetermined terminals of the coupled directivity couplers, and therefore, it is possible to prevent the reference signal from generating unnecessary radiations and easily and reliably secure isolation between the reference signal generation section and calibration reception section.

This application is based on Japanese Patent Application No.2003-291778 filed on August 11, 2003, entire content of which is expressly incorporated by reference herein.

### Industrial Applicability

The array antenna reception apparatus and received signal calibration method according to the present invention is suitable for use in a radio apparatus and received signal calibration method based on an array antenna scheme or the like that need to avoid the problem that, with respect to a received signal multiplexed with a reference signal, the reference signal constitutes noise to the received signal and deteriorates the calibration accuracy of the received signal.

## Claims

1. An array antenna reception apparatus comprising:
a reference signal generation section that generates a reference signal only when a reception level of a received signal is equal to or lower than a threshold;
a plurality of reception sections that multiplex said reference signal with said received signal;
an error calculation section that compares the received signal multiplexed with said reference signal with said reference signal to calculate an error of said received signal in each of said reception sections; and
a received signal processing section that corrects said received signal based on the calculated error of said received signal.

2. The array antenna reception apparatus according to claim 1, further comprising:
a selection section that selects said reception section that extracts said received signal from among said plurality of reception sections; and
a calibration reception section that provides said received signal extracted by said selection section to said error calculation section as a calibration signal,
wherein said reference signal generation section provides said reference signal generated to said calibration reception section, and
said calibration reception section multiplexes said provided reference signal with said received signal and provides the multiplexed signal to said error calculation section.

3. The array antenna reception apparatus according to claim 1, further comprising a power ratio calculation section that calculates a ratio of a power level of said reference signal to noise in said received signal multiplexed with said reference signal and adjusts the power level of said reference signal according to the calculated power level ratio.

4. The array antenna reception apparatus according to claim 3, wherein said power ratio calculation section calculates a power level ratio of said reference signal to said noise for each user and adjusts the power level of said reference signal according to the calculated power level ratio.

5. The array antenna reception apparatus according to claim 1, further comprising:
a selection section that selects said reception section that extracts said received signal from said plurality of reception sections;
a calibration reception section that provides said received signal extracted by said selection section to said error calculation section as a calibration signal; and
a switching section that connects any one of said calibration reception section and said reference signal generation section to said selection section.

6. The array antenna reception apparatus according to claim 1, further comprising:
a selection section that selects said reception section that extracts said received signal from among said plurality of reception sections;
and a calibration reception section that provides said received signal extracted by said selection section to said error calculation section as a calibration signal,
wherein said reception sections each comprise a directivity coupler provided with an input terminal, a terminal having directivity with respect to said input terminal, a terminal having opposite directivity with respect to said input terminal and a terminal having no directivity with respect to said input terminal, and
when said received signal is input to said input terminal of said directivity coupler, said calibration reception section is connected to the terminal having directivity with respect to said input terminal via said selection section, said reference signal is input to the terminal having opposite directivity with respect to said input terminal and said received signal processing section is connected to the terminal having no directivity with respect to said input terminal.

7. The array antenna reception apparatus according to claim 1, further comprising:
a selection section that selects said reception section that extracts said received signal from among said plurality of reception sections; and
a calibration reception section that provides said received signal extracted by said selection section to said error calculation section as a calibration signal,
wherein said reception sections each comprise two directivity couplers provided with an input terminal, a terminal having directivity with respect to said input terminal, a terminal having opposite directivity with respect to said input terminal and a terminal having no directivity with respect to said input terminal,
when said received signal is input to said input terminal of one said directivity coupler, said calibration reception section is connected to the terminal having directivity with respect to said input terminal via said selection section, a terminal end is connected to the terminal having opposite directivity with respect to said input terminal and an input terminal of said directivity coupler is connected to the terminal having no directivity with respect to said input terminal, and
a terminal end is connected to the terminal having directivity with respect to said input terminal of said other directivity coupler, said reference signal is input to the terminal having opposite directivity with respect to said input terminal and said received signal processing section is connected to the terminal having no directivity with respect to said input terminal.

8. A received signal calibration method comprising:
a measuring step of measuring a power level of a received signal;
a reference signal generation step of generating a reference signal only when the measured power level of said received signal is equal to or lower than a threshold;
a multiplexing step of multiplexing said reference signal with said received signal;
an error calculation step of calculating an error of said received signal caused by signal processing on said received signal by comparing the power level of said received signal multiplexed with said reference signal with the power level of said reference signal; and
a received signal processing step of correcting said received signal based on the calculated error of said received signal.
